# EUROPEAN PATENT SPECIFICATION

(11) **EP 2 350 382 B1**
(45) Date of publication and mention of the grant of the patent: **24.10.2012**
(21) Application number: 09785685.0
(22) Date of filing: 23.09.2009
(51) Int. Cl.: D21C 5/02

(54) **RECYCLING OF FIBRE PRODUCTS**
RECYCLING VON FASERPRODUKTEN
RECYCLAGE DE PRODUITS FIBREUX

(30) Priority: 17.10.2008 GB 0819051; 06.08.2009 GB 0913778
(43) Date of publication of application: 03.08.2011
(60) Divisional application: 10196646.3
(73) Proprietor: Stephenson Group Limited, Horsforth Leeds LS18 5PU (GB)
(72) Inventor: TAYLOR, Roy Kenneth, Yorkshire HD3 4EF (GB)
(74) Representative: Pidgeon, Robert John
(86) International application number: PCT/GB2009/051237
(87) International publication number: WO 2010/043882

(56) References cited:
- EP-A- 0 163 444
- WO-A-2004/048680
- US-A- 5 200 034
- US-A- 5 227 019
- US-A- 5 518 581
- US-A- 5 817 717
- US-A- 6 103 687
- US-A1- 2002 121 347

## Description

This invention relates to a method of recycling fibre products, namely printed paper products. The invention relates in particular to a method of recycling fibre products involving subjecting them to a mechanical treatment to separate fibres, removing the ink therefrom (commonly known as "deinking"), and recovering the fibres.

The recycling of paper products is now an important industry. Initially, paper products, particularly for the box and board industry, were recycled without deinking. A later development was the use of waste paper, deinked, as a source of fibres for the production of newsprint, but now certain waste paper products can be deinked and used for higher quality papers, for example tissue, cartridge and writing papers.

A common method of paper recycling is the flotation deinking process in which waste paper is subjected to a mechanical pulping treatment to break the paper down into fibres in an aqueous medium, and a flotation technique is used to remove ink. To remove the ink, a chemical agent or composition, commonly referred to as a collector chemical, is present, and air is introduced at the bottom of the flotation chamber. The air, in the presence of the collector chemical, transports ink to the surface of the aqueous medium. At the surface, the ink-rich foam is removed by mechanical means.

The collector chemical is an essential component, in assisting the transport of ink to the surface and trapping the ink in a stable foam at the surface. Thus, the collector chemical must, of course, cause the ink particles to be taken up efficiently and form a controlled stable foam, but there are other requirements to be borne in mind. For example, if solid, it should dissolve readily; if liquid, it should be easy to handle; it must be safe; it should be inexpensive to use; it should be easy to transport; and so forth.

Further, it is believed that the foam level is important, for efficient operation of the process. Excessive foam will have an adverse effect on fibre recovery. A small tight foam is desirable to assist the mechanical removal of foam, with collected ink, from the surface of the floatation cell.

The fatty acid soaps of alkali metals, for example sodium or potassium, are widely used as collector chemicals. Such soaps are believed to be converted, in use, to calcium and magnesium soaps, which are foam forming and hydrophobic, thereby collecting hydrophobic ink. However the foam is generally undesirably high, and is difficult to control.

Another method of paper recycling is the wash deinking process in which the substantially pulped and separated paper products are washed, without gas being employed to carry ink particles to the surface. Instead, ink removed from the paper products is extracted on removal of the aqueous medium, for example by a draining step. A collector chemical is present to aid the removal of the ink from the paper products. Typically, a wash deinking process employs several cycles of dilution, washing and water removal and/or rinsing.

Dual methods of paper recycling, involving flotation deinking and wash deinking, are also employed.

US-A-5,200,034 describes a method for deinking dry toner electrostatic printed wastepaper, using an ethoxylated surfactant, propoxylated surfactant, esterified surfactant or alkanolamide surfactant having an HLB value of less than 10.0

EP-A-0163444 describes a deinking method which utilises an aqueous dispersion of a resin precursor, cured during the pulping operation.

US-A-2002/0121347 describes a solid composition for deinking of recycled paper comprising at least one fatty acid that is partially saponified with at least one alkaline substance.

WO 2004/048680 describes a two-stage flotation deinking method. An alkaline flotation step is immediately followed by a flotation step in the neutral to weakly acid pH range.

US-A-5,518,581 describes a flotation deinking method which employs a reaction product of an alkylene oxide with a reaction mixture of a natural oil or fat with an alkanolamide (as further defined).

There is an ever-present need for improved paper recycling methods, with improvement suitably being measured by one or more of: higher brightness of recycled paper; enhanced recovery of fibre; lower height and/or better control of foam, in flotation deinking processes; and reduced environmental impact of the wash liquor and/or reduced (or no) clean-up needed thereof, before disposal.

In accordance with a first aspect of the present invention there is provided a method of removing ink from paper products by a flotation deinking process, comprising providing an aqueous medium which contains separated paper fibres derived from the paper products by mechanical treatment, and which also contains a collector chemical composition, characterised in that the collector chemical composition comprises a polysiloxane, and a delivery aid for the polysiloxane, the delivery aid comprising one of more compounds selected from an alkali metal salt of a fatty acid moiety, and a nitrogenous salt of a fatty acid moiety, and a water-swellable polymer; wherein the water-swellable polymer is a synthetic material, a natural material or a synthetically-modified natural material; and is selected from polyacrylates, other carboxylate polymers, celluloses or cellulose ethers, gums or hydrocolloids, and polyvinyl alcohols; and wherein the collector chemical composition is added after the completion of the mechanical treatment.

Preferably the collector chemical composition is an aqueous composition, which is dispersible in the aqueous medium. Preferably the collector chemical is an aqueous emulsion, preferably an oil-in-water emulsion.

The collector chemical composition may be supplied in a concentrated form and diluted with water prior to or at the point of supply to the separated paper fibres

The collector chemical composition may be a solid which is dissolvable or dispersible into water before or during the method of the first aspect.

When the method of removing ink is a flotation deinking process hydrophobic moieties produced by the collector chemical composition float to the surface, collecting hydrophobic ink particles as they rise.

It is believed, and preferred, that the delivery aid and the polysiloxane form an emulsion in water, and the resulting collector chemical composition is dispersed throughout the wash liquor. The delivery aid is believed to release the polysiloxane in the wash liquor in the deinking method. For example when the delivery aid is a fatty acid salt (also called a soap herein), the fatty acid salt is believed to undergo progressive ion exchange with hardness cations (typically Ca²⁺, Mg²⁺) in the wash liquor causing the breakdown of the polysiloxane-fatty acid salt emulsions. In the case of a water-soluble polymer the reduction in viscosity and concentration is believed to cause the release of the polysiloxane, in a controlled fashion. The polysiloxane is believed, in each case, to be released as a fine dispersion, in a progressive manner. It is highly compatible with hydrophobic surfaces, and will attach to and coat the ink particles. Since the polysiloxane is highly hydrophobic it will increase the hydrophobicity of the ink particles, in turn increasing the tendency of the ink particles to rise from the water and the hydrophilic paper fibres, the upward movement being assisted by the rising gas bubbles.

Further, in the case of the fatty acid salt, the calcium/magnesium soaps form their characteristic open scummy foam, which assists in collecting the hydrophobic ink particles at the surface of the flotation cell, where the ink-carrying foam is collected.

It is believed that in carrying out the present invention virtually all of the polysiloxane is removed together with the ink. This is environmentally desirable and represents an important contrast with some earlier processes in which silicon-containing surfactants have been proposed as additives to assist the process, such surfactants remaining in the wash liquor in high proportion. Furthermore the latter processes lead to difficulties in dosing the correct amount of collector chemical composition into the aqueous medium, due to the varying residual amounts therein as the aqueous medium is recycled and re-used. In contrast, in the present invention the correct amount can be dosed, for each deinking operation.

Analogous mechanisms are believed to apply to other aqueous methods of removing ink from paper products.

The foregoing explanation is provided by way of explanation and represents our best view of how the invention works. However we are not bound by any theory as to how the invention works. Our objective finding is that embodiments of the present invention appears to offer benefits in terms of brightness of recycled paper, level of recovered fibre, and environmental impact of the wash liquor.

In the case of fatty acid salts as the delivery aid, preferably the ratio of the polylsiloxane to the delivery aid is in the range 0.1-50 parts, preferably 1-40 parts, preferably 5-30 parts, preferably 10-30 parts polysiloxane, to 10 parts delivery aid, wt/wt.

In the case of water-swellable polymers as the delivery aid, the ratio of the polylsiloxane to the delivery aid is in the range 3-200 parts, preferably 10-150 parts, preferably 20-120 parts, preferably 25-100 parts polysiloxane, to 1 part delivery aid, wt/wt.

When numerical definitions are given in this specification they relate to the total complement of the respective component. There may of course be more than one polysiloxane material, more than one delivery aid, more than one water-swellable polymer, more than one fatty acid salt, so on for other components and possible components. Thus the previous paragraph defines ratios between polysiloxane compounds in total and delivery aid compounds in total; and the same notion applies to other numerical definitions given in this specification.

The paragraphs which follow concern the fatty acid used in the formation of a salt which may be used as the delivery aid, in embodiments of this invention.

Preferred fatty acid moieties may be C₅₋₂₈ fatty acid moieties, or fatty acid moieties having equivalent properties, for example C₁₀₋₅₆ dicarboxy fatty acid moieties, effectively dimers of C₅₋₂₈ monocarboxy fatty acid moieties.

Preferred fatty acid moieties are C₁₂₋₂₂ fatty acid moieties, or fatty acid moieties having equivalent properties, for example C₂₄₋₄₄ dicarboxy fatty acid moieties, effectively dimers of C₁₂₋₂₂ monocarboxy fatty acid moieties.

Those skilled in the art will be aware of the very wide range of fatty acid moieties which would lend themselves to use in the method of the present invention.

Preferably a fatty acid moiety is selected, which with a suitable cation provides a salt which is effective as an emulsifier of the polysiloxane.

The source of the fatty acid moiety may be the corresponding fatty acid or an ester, for example a triglyceride, from which a suitable salt may be derived directly, by saponification. Glycerol produced by the saponification may remain in the reaction product.

Examples of suitable fatty acid moieties may include saturated fatty acid moieties, mono-unsaturated fatty acid moieties, di-unsaturated fatty acid moieties, tri-unsaturated fatty acid moieties, tetra-unsaturated fatty acid moieties, fatty acid moieties with hydroxy groups in the molecule, and cyclic fatty acid moieties. It will be appreciated by those skilled in the art that the commercially available fatty acid moieties of this type will typically comprise a mixture of different fatty acid moieties most of which are within the definition C₅₋₂₈ fatty acid moiety (or equivalent). Examples of individual fatty acid moieties of this type include the moieties: laurate, myristate, palmitate, stearate, palmitoleate, oleate, linoleate, linolenate, arachidate, arachidonate and erucate.

A blend of C₁₂₋₁₈ saturated and C₁₈₋₂₂ unsaturated fatty acid moieties has been found to give good performance; preferably 30-65 %wt C₁₂₋₁₈ saturated fatty acid moieties and 35-70 %wt C₁₈₋₂₂ unsaturated fatty acid moieties; in each case on total weight of the fatty acid moieties present.

The preparation of the salt of the fatty acid may be achieved simply by mixing the selected base and the fatty acid, under suitable, very well known, conditions.

A salt of a fatty acid moiety may be formed using an alkali metal base; for example it may be a sodium, potassium or lithium salt. Preferably, however, it is formed using a nitrogenous base, for example ammonia, a dialkanolamine, a trialkanolamine, morpholine, a monoalkanolamine; or any other amine which is sufficiently basic to form a stable non-toxic salt with the fatty acid moiety. Mixed bases are within the ambit of the present invention.

Most preferably the salt is a salt of a fatty acid moiety with a dialkanolamine.

A suitable dialkanolamine has the general formula:

R¹N(R²OH)₂

where R¹ is preferably a hydrogen atom, or a hydrocarbyl group (preferably a C₁₋₆ alkyl group); and each R² is, independently, an interlinking hydrocarbyl group (preferably C₁₋₆ alkylene, especially ethylene -CH₂-CH₂-). Alkyl and alkylene groups may be branched, but are preferably unbranched. The hydroxyl groups of the alkanol groups are preferably primary hydroxyl groups.

A dialkanolamine is preferably diethanolamine, where R¹ is a hydrogen atom and each R² is ethylene, having the general formula H(CH₂CH₂OH)₂.

A suitable monoalkanolamine has the general formula

(R¹)₂N(R²OH);

and a suitable trialkanolamine has the general formula

N(R²OH)₃;

where R¹ and R² are as defined above for the dialkanolamine. Thus a preferred monoalkanolamine is monoethanolamine and a preferred trialkanolamine is triethanolamine.

An especially preferred base comprises diethanolamine, preferably substantially solely or in major proportion. For example a commercially available composition comprising 85 wt% of diethanolamine and 15 wt% of a mixture of other amines, may suitably be employed. Preferably, however, diethanolamine when employed comprises at least 95 wt%, preferably at least 99 wt%, of the nitrogenous base complement; and preferably at least 90 wt%, preferably at least 96 wt%, of the total base complement

The strength of the ionic bond between the cation and anion of a fatty acid salt is believed to be important. If the bond is too strong, calcium exchange (to furnish the calcium/fatty acid salt) is slow. A weaker bond makes the exchange both kinetically and thermodynamically more favourable. Salts of nitrogenous bases give weaker bonds than alkali metal salts, and are believed to be particularly effective as emulsifiers of polysiloxanes, and thus particularly suitable, and preferred, for use in the present invention.

The base moiety and the fatty acid moieties are desirably present in approximately stoichiometric proportion, but preferably at least a 0.95:1 molar ratio of base/carboxylate reactive groups, most preferably at least 1:1.

The paragraphs which follow concern water-swellable polymers which may be used as the delivery aid.

Water-swellable polymers useful in this invention may be based upon synthetic polymers, natural polymers, or biologically or chemically modified natural polymers. Polymers which generate very low levels of foam in aqueous solutions or dispersions are preferred.

Some polymers may require neutralisation with a base to create optimum pH conditions for swelling and emulsification, while others may be sourced in a pre-neutralised condition. Typical bases used for neutralisation may include hydroxides, carbonates and bicarbonates of alkaline or alkaline earth metals, ammonia, monoethanolamine, diethanolamine, triethanolamine, morpholine, and other amines.

Some of the polymers may include small quantities of surfactant to assist dispersion in water, particularly when they have been pre-neutralised. However, the surfactant concentration in the final formulation will not be sufficient to emulsify the polysiloxanes by itself, or to interfere with the flotation process.

Some of the polymers will require heating to achieve emulsification of polysiloxanes, while others will perform the task at ambient temperature. Some of the polymers will form emulsions with simple mixing while others will require use of high mechanical energy techniques such as high shear mixing or homogenisation.

Some of the polymers produce satisfactory emulsions on their own, and some may give synergistic effects in combination with other polymers.

A water-swellable polymer, as defined above in relation to the first aspect, suitable for use in the present invention, may be a gum or gel.

Further information about water-swellable polymers suitable for use in the present invention is as follows.
**1) Polyacrylate polymers, including copolymers and crosspolymers, and other related carboxylate polymers.** Preferred types include acrylic or alkylacrylic moieties, for example methacrylic or ethylacrylic moieties, and include copolymers and crosspolymers with amphiphatic properties between acrylic acid (or alkylacrylic acids such as methacrylic acid or ethylacrylic acid) and a hydrophobic alkyl carbon chain (preferably C10 - C30), such as those marketed under the Carbopol trademark (Trademark of Noveon), particularly Carbopol 1342, 1382, ETD 2020, ETD 2050, & Ultrez 21. Other preferred materials are marketed under the Permulen trade mark (Noveon), particularly Permulen 1621 & 1622; also Polygel DR (Trademark of 3V Sigma).
**2) Chemically or microbially modified celluloses and cellulose ethers,** including the following:
   Carboxymethylcellulose
   Carboxyethylcellulose
   Methylcellulose
   Ethylcellulose
   Propylcellulose
   Hydroxymethylcellulose
   Hydroxyethylcellulose
   Hydroxypropylmethylcellulose
   Microcrystalline cellulose (this material is particularly useful when mixed with other swellable polymers to modify gel properties)
   Microfibrous cellulose (this material is useful when mixed with other polymers to modify rheology and suspension properties).

   Especially preferred materials are methylcelluloses, for example from the Methocel A series (from Amerchol), and hydroxypropylmethylcelluloses, for example from the Methocel E, F, J, K and 40 series; particularly such materials within the HLB range 10 - 12, which we believe to be ideal for preparation of oil-in-water emulsions of polysiloxanes. Methocel and Amerchol are Trademarks of the Dow Chemical Co.
**3) Polymeric Gums derived from natural sources** These gums or hydrocolloids are mainly long - chain, straight or branched polysaccharides that contain hydroxyl groups that can bond to water molecules. These chains can typically consist of about 2000 - 10,000 monosaccharide units. Gums can be neutral or anionic. Not all of the gums are based on polysaccharides, for example gelatin is a high molecular-weight polypeptide derived from collagen. Examples of gums in this class include:
   Gum Arabic
   Gum Karaya
   Gum Tragacanth
   Gum Ghatti
   Agar-Agar
   Guar Gum
   Locust Bean Gum
   Konjac
   Alginates including Ca, Na, K, NH₄, & Mg salts)
   Carrageenans
   Pectin
   Tara Gum
   Xanthan Gum
   Gellan Gum
   Rhamsan Gum
   Welan Gum
   Pullulan
   Curdlan
   Gelatin
   Chitosan
   Gum Acacia
   Furcellaran
   Cassia Gum
   Starch

   Naturally derived gums can be classified according to their structure or function, but are most often grouped together by their sources. Most are considered natural products, depending on how they arrive in their final form. The most widely used of the plant exudates is gum arabic, but gum tragacanth, gum karaya and gum ghatti also fall into this category. Others are considered plant extracts (some from marine plants) such as agar-agar, alginates, carageenan, conjac and pectin. Guar, cassia and locust bean gums are seed gums. Microbial polysaccharides produced as microbial exudates include xanthan, curdlan rhamsan, welan and gellan gums. Many of the gums have a preferred pH range for optimum performance, and some also have an optimum temperature range to give the best emulsification properties.
**4) Other Chemically modified polymeric gums and gels of natural origin.** Examples include:
   Propylene Glycol Alginates
   Modified Starches
   Hydroxypropyl Guar
**5) Polyvinyl alcohol**
   This material is normally manufactured by hydrolysis of polyvinyl acetate. Suitable grades vary over a range of molecular weights and in degree of hydrolysis. Crosslinked grades may also be utilised, such as those borated with borax (sodium tetraborate) or boric acid.

Higher molecular weight, partially hydrolysed grades are preferred. There are a number of commercial sources, such as Celvol and Premiol (trademarks of Celanese Corporation), Mowiol (Trademark of Kurary Group), and Elvanol (trademark of Du Pont), all offered in a wide range of differing grades.

Generally, a water-swellable polymer having an HLB value in the range 8-14 preferably 10-12, is preferred for use in the present invention.

A polysiloxane is suitably a compound comprising multiple units of the formula -Si(R^{a})₂-O- where each R^{a} is an oxygen atom or a hydrocarbyl group, preferably a hydrocarbon group, for example aryl, especially phenyl, or a C₁₋₁₂ alkyl group, preferably C₁₋₆ alkyl, preferably C₁₋₄ alkyl, preferably n-alkyl; especially a methyl group. The units may be connected together to form linear arrays or branched or cross-linked or cyclic forms, or network structures in 2-dimensions. Silicone functional groups include:
Monofunctional: R^{b}-Si(R^{b})₂-O- wherein each R^{b} represents a hydrocarybl group. A terminal group.
Difunctional: -R^{c}-Si (R^{b})₂-R^{c}- where each group R^{c} represents an oxygen atom and each group R^{b} represents a hydrocarbyl group. An intermediate, chain-forming, group.
TrifunctionaL: -R^{c}-Si(R^{b})(R^{c}-)-R^{c} where each group R^{c} represents an oxygen atom and each group R^{b} represents a hydrocarbyl group. An intermediate, network-forming, group.
Quadrifunctional: -Si(-R^{c}-)₄ where each group R^{c} represents an oxygen atom. An intermediate, network forming, group.

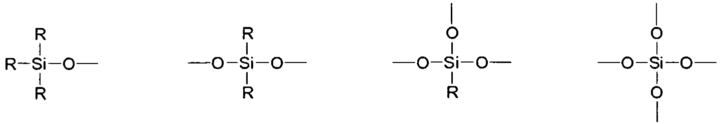

Any of these groups may be present in polysiloxanes used in this invention.

This invention preferably uses one or more hydrophobic water insoluble polysiloxane compounds.

This invention may use a polysiloxane compound selected from the following classes:
1) Linear or branched polydimethylsiloxanes (especially preferred materials in the present invention).
2) Other linear or branched polydialkylsiloxanes.
3) Linear or branched polydiarylsiloxanes.
4) Linear or branched polyalkylarylsiloxanes.
5) Crosslinked versions of 1) - 4) to give 2-dimensional resin type structure (networks).
6) Cyclic dialkyl, diaryl, or alkylaryl siloxanes.
7) Linear or branched polysiloxanes as described in 1) - 4) above end-capped with alkyl, aryl or hydroxy group(s).

The polysiloxane compounds may suitably be liquids or gums, preferably within a molecular weight range of 500 - 200,000, more preferably 3,000 - 100,000, preferably 4,000 - 50,000, preferably 5,000 - 20,000.

A preferred polysiloxane may suitably be a compound having the groups 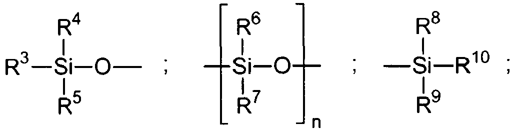 preferably a compound conforming to the general definition 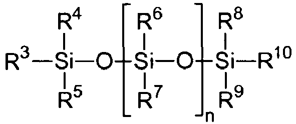 where:
R³ represents a hydroxyl group or hydrocarbyl group;
R⁴ represents a hydrocarbyl group or an oxygen atom;
R⁵ represents a hydrocarbyl group or an oxygen atom;
R⁶ represents a hydrocarbyl group or an oxygen atom;
R⁷ represents a hydrocarbyl group or an oxygen atom;
R⁸ represents a hydrocarbyl group or an oxygen atom;
R⁹ represents a hydrocarbyl group or an oxygen atom;
R¹⁰ represents a hydroxyl group or hydrocarbyl group;
and n is an integer, preferably from 3 to 3,000, preferably from 40 to 1,000, and preferably from 100 to 500.

Preferably groups R⁴-R¹⁰ are wholly or predominantly hydrocarbyl groups. R⁴-R¹⁰ may comprise some -O- linkages which promote network formation and / or side chain formation.

Preferably a siloxane side chain comprises a branch comprising m units of general formula

-Si(R^{b})₂-O-

where each group R^{b} independently represents a said hydrocarbyl group or an oxygen atom, m is an integer preferably from 1 to 1,000, preferably from 1 to 100, preferably from 1 to 10.

Preferably a siloxane side chain further comprises a terminal group of formula

R³R⁴R⁵-Si-O-

where R³R⁴R⁵ are as defined above.

Another suitable polysiloxane is a cyclic polysiloxane, preferably comprising p units of general formula

-Si(R^{c})₂-O-

formed into a ring, wherein each group R^{c} may independently represent a hydrocarbyl group; wherein p is a sufficient number to permit cyclisation; and is preferably from 3 to 8, preferably 4 to 6, and most preferably 5.

The polysiloxane may be a single grade or a blend of grades. Even if a single grade it is almost inevitably a range of compounds. The form "polysiloxane", like "fatty acid", is used to denote all situations, singular and plural.

A polydialkylsiloxane is a preferred polysiloxane. In preferred embodiments a polydialkylsiloxane may be the sole polysiloxane present or may advantageously be used in combination with a polyalkylsiloxane resin (that is, a networked, or cross-linked, form) and/or a cyclic polysiloxane)

Especially preferred polysiloxanes are polydimethylsiloxane, polydiphenylsiloxane, polymethylphenylsiloxane, cyclic polydimethylsiloxane and polymethylsiloxane resin.

The polysiloxane can be a solid or gum dispersible into a low viscosity polysiloxane, but preferably the polysiloxane employed is a liquid; often it is provided in a form which is called an "oil" or "fluid".

Preferably a polysiloxane for use in the method has a kinematic viscosity in the range 5 cst to 2,000,000 cst (mm²s⁻¹), preferably 10 cst to 1,000,000 cst, preferably 20 cst to 200,000 cst, preferably 30 cst to 100,000 cst, preferably 50 cst to 50,000 cst, preferably 200 cst to 10,000 cst; all as measured by the method of DIN 53018, at 25°C, in cst.

Preferably, the water present in the collector chemical composition is soft water (substantially free of hardness-forming cations); preferably it is deionized, distilled or softened.

Preferably, the water used in the deinking method contains hardness-forming cations, for example calcium and/or magnesium. It may be desirable to add hardness cations to the water used in the deinking method to provide optimal deinking conditions. For example calcium chloride could be added.

In a flotation deinking method, it is convenient, but not essential, that the gas passed through the aqueous medium is air.

A flotation deinking process is preferably carried out at a temperature in the range 10-55°, preferably 20-50°C, preferably 30-45°C, preferably 40-45°C. 45°C is a preferred operating temperature in many embodiments.

The collector chemical composition is preferably flowable. Suitably it is a pourable liquid, preferably at all temperatures in the range about 5 to 25°C; alternatively may be a pumpable semi-solid, including a thixotropic or shear-thinning material that become more readily flowable when subjected to shear stress.

The collector chemical composition may be added to the wash liquor as such (i.e. as supplied and/or further diluted with water, to improve the dosing stage, e.g. give better dispersion in the aqueous medium). Suitably the collector chemical composition may be supplied as a concentrate and diluted with water (preferably flowing and/or turbulent water), prior to or at the point of supply to paper products which are to be pulped, or to paper products which are being pulped, in a pulper) or to separated paper fibres (in the pulper, or in a flotation cell). The dilution may suitably be effected using 20-500 parts water, preferably 50-200 parts water, per 1 part collector chemical composition, wt/wt. The dilution preferably takes place not more than 5 minutes before the supply to the separated paper fibres, preferably not more than 2 minutes before. Preferably the dilution takes place at the point of supply of the collector chemical composition to paper products which are to be pulped or to paper products which are being pulped, or to separated paper fibres; by which we mean, preferably not more than 1 minute before, preferably not more than 30 seconds before, preferably not more than 10 seconds, preferably not more than 5 seconds before.

Alternatively the collector chemical composition may be supplied as a solid. For example it may be a material which is solid at all temperatures in the range about 5 to 25°C. Preferred solid forms are small pieces of average weight not exceeding 20g, preferably not exceeding 10g, for example pellets or flakes. Any solid salts may be added to the deinking chamber as such, in order to dissolve or disperse from the solid phase, or may be melted and added, or may be dissolved in a solvent or diluent, for example an aqueous or aqueous-compatible solvent or diluent, to produce a diluted, liquid form of the collector chemical, which diluted form is added to the deinking chamber.

Preferably the collector chemical composition which is added to the deinking chamber (which as noted above may in some embodiments be in a pre-diluted form) contains at least 40% water, preferably at least 50% water, preferably at least 60% water; and preferably up to 99.9% water, preferably up to 99.5 water, preferably up to 99% water; in each case expressed as % wt/wt.

The polysiloxane and the delivery aid, and any other components of the collector chemical composition, may be blended together by any convenient means; for example a pressure homogeniser, a sonolator, or a mechanical mixer, for example a high shear mixer. The resulting collector chemical composition may be of homogeneous appearance (though we believe that it is an emulsion, and contains micelles of the polysiloxane and of the delivery aid).

A mixture of delivery aids may be employed, for example a mixture of water-swellable polymers; a mixture of soaps (one or more amine soaps and/or one or more alkali metal soaps); and a mixture of one or more water-swellable polymers with one or more soaps (amine and/or alkali metal) (in the latter case the quantity definitions given above for the water-swellable polymer and for the soap still apply, independently for each component.

In one embodiment a first soap may be a liquid soap blended with a second soap, for example a second soap which is a solid at some or all temperatures in the range 5-25°C; preferably to form a solid soap which is readily dispersed in the water of the pulper or the deinking chamber, by one or more of the methods described above.

Particularly useful in this invention may be a collector chemical composition containing a polydimethylsiloxane, a nitrogenous salt and the alkali metal salt being present in a summated amount to satisfy the quantitative definitions herein for said "fatty acid salt"; but being present in relative proportions of 0.01-100 parts, preferably 0.01-10 parts, preferably 0.3-4 parts nitrogenous salt, to alkali metal salt, wt/wt.

A fluidiser component may be added to the collector chemical composition during its manufacture.

A fluidiser component may comprise one or more fluidiser compounds.

A fluidiser component, when present, preferably comprises a compound having one or more hydroxyl groups. Preferably it is a small molecule of MW less than 400, preferably less than 300, preferably less than 200, and most preferably less than 150. Water may be a suitable fluidiser compound. Alternatively a suitable fluidiser compound may comprise an organic compound, preferably selected from a polyhydric alcohol, a polyoxyalkylene glycol and a glycol ether. Examples of suitable polyhydric alcohols are alkylene glycols, for example C₁₋₈ alkylene glycols, for example ethylene glycol, monopropylene glycol and hexylene glycol, glycerol, polyalkylene glycols, for example polyethylene glycol, and the series of polyhydric alcohols available from Shell under the Trade Mark DOBANOL. An especially preferred polyhydric alcohol fluidiser compound is a C₁₋₈ alkylene glycol, most preferably monopropylene glycol. Examples of suitable polyoxyalkylene glycols are polyethylene oxide glycol, polypropylene oxide glycol and the copolymers thereof. Examples of suitable glycol ethers are ethylene glycol ethers, propylene glycol ethers, diethylene glycol ethers and dipropylene glycol ethers. Suitable glycol ethers also include dialkyl glycol ethers and esterified glycol ethers. A suitably glycol ether may be defined by the formula

C₁₋₆ alkyl- (O-X¹)ₙ-O-R^{q}

where X¹ is an ethylene or propylene residue, R^{q} is a hydrogen atom or a C₁₋₆ alkyl group or a (C₁₋₆ alkyl)carbonyl group, and n is the integer 1 or 2. A preferred alkyl group, including the alkyl group of an (alkyl) carbonyl group, is a C₁₋₄ alkyl group, for example butyl, (e.g. n-butyl), propyl (e.g. n-propyl, i-propyl), ethyl and methyl. R^{q} is preferably a hydrogen atom. Examples of especially preferred examples of glycol ethers are dipropylene glycol monobutyl ether and ethylene glycol monobutyl ether (also called butyl glycol, butyl ethoxol, and 2-butoxyethanol, the latter being especially preferred.

The fluidiser component, when present as part of collector chemical composition, is desirably present in small quantity relative to the other two components. For example the fluidiser component may be present as 0-30% by weight based on the total weight of the collector chemical composition.

The collector chemical composition may contain a hydrophobic silica, for example hydrophobic precipitated silica or hydrophobic fumed silica. Such compounds are commercially available; a preferred product is Sipernat D1O (Trademark of Degussa). One class is manufactured by reacting silicone compounds (normally silanes) with finely divided silica, to effect surface modification. Hydrophobic fumed silicas are made by reacting hydrophilic fumed silicas with silanes or siloxanes. Heating may be required to complete the chemical reaction. Similarly, hydrophobic precipitated silicas can also be made by reacting hydrophilic precipitated silicas with silanes or siloxanes. A finely divided hydrophobic silica can be produced, and is a desired form when used in the present invention.

A hydrophobic silica is believed to improve efficiency of the method by increasing the hydrophobicity of the ink particles, and by moderating or controlling foam formation on the flotation cell surface. They have the capacity to burst bubbles in foams, assisting foam control properties.

A hydrophobic silica, when present, is preferably present in an amount of at least 0.01 parts hydrophobic silica per 100 parts polysiloxane, wt/wt; and preferably at least 0.05 parts, preferably at least 0.075 parts, preferably at least 0.1, preferably at least 0.5 parts, of hydrophobic silica per 100 parts polysiloxane, wt/wt.

A hydrophobic silica, when present, is preferably present in an amount of up to 20 parts hydrophobic silica per 100 parts polysiloxane, wt/wt; and preferably up to 10, preferably up to 5 parts, of hydrophobic silica per 100 parts polysiloxane.

Preferably the collector chemical composition has a dynamic viscosity in the range 500-10,000 cP, preferably 1,000-5,000 cP, preferably 1,500-2,500 cP, when measured on a Brookfield viscometer, using Spindle No. 2, or Spindle No. 3, at 12 rpm, at 20°C.

The collector chemical composition may also contain a rheology modifier, which may, or may not, be a water-soluble polymer as described above. Examples of rheology modifiers may include an acrylic thickener, a modified cellulose, a modified clay, or a gum or polysaccharide (for example guar gum, xanthan gum or carrageenan). It will be appreciated that such materials may also function as a delivery aid, as described herein.

Preferably, the collector chemical composition is present in an amount from about 0.001 to about 2 wt%, preferably from about 0.005 to about 1 wt%, preferably from about 0.01 to about 0.5 wt%, preferably from about 0.02 to about 0.3 wt%, preferably from about 0.05 to about 0.2 wt%, based on weight of dry waste paper.

Preferably, the total summated weight of polysiloxane(s) and delivery aid(s) is an amount from about 0.001 to about 2 wt%, preferably from about 0.005 to about 1 wt%, preferably from about 0.01 to about 0.5 wt%, preferably from about 0.02 to about 0.3 wt%, preferably from about 0.05 to about 0.2 wt%, based on weight of dry waste paper.

The collector chemical composition can be added to the aqueous medium before, during, or after the completion of the mechanical treatment. Preferably it is added after the completion of the mechanical treatment, at the deinking stage, most preferably shortly before or substantially at the commencement of ink removal. The collector chemical composition may be supplied as a ready-to-use emulsion, preferably an aqueous emulsion, or a concentrate, preferably an aqueous concentrate, to be diluted before addition.

Preferably the method of the present invention achieves ink removal with low loss of fibre. Preferably the fibre recovery is at least 95% by weight, preferably at least 97%.

Preferably in a flotation deinking method of the invention most of the weight of silicon-containing compound(s) is removed with the foam; preferably at least 90% by weight of the silicon-containing compound(s), more preferably at least 95%, most preferably at least 99% when carried out in a Voith Sulzer flotation cell as described in the examples herein.

It may be desirable to employ products such as sodium hydroxide, sodium silicate and hydrogen peroxide in the pulping and/or deinking steps, as is standard.

The method in accordance with the invention may for example be a flotation deinking method, or a wash deinking method, or a dual method. The method may be of particular benefit in relation to flotation deinking.

In a preferred embodiment the method comprises:
a) providing a salt of a fatty acid moiety and providing it as a dispersion of the salt in water; and
b) mixing the dispersion of the salt in water with a polysiloxane.

Preferred aspects of the collector chemical composition, polysiloxane and delivery aid, as are defined above.

The water employed in the method is preferably soft water, as further described above.

In accordance with a second aspect of the present invention there is provided a method of removing ink, the method being as set out in the first aspect, and recycling said printed paper products, comprising: subjecting the paper products to a mechanical treatment (pulping) in an aqueous medium until substantially broken down into fibres; adding to the medium, after the mechanical treatment, said collector chemical composition; passing a gas through the aqueous medium containing the fibres and the collector chemical composition and removing the ink-rich foam on the surface and/or removing ink by successive cycles of draining and rinsing; and recovering the cleansed paper pulp.

In accordance with a third aspect of the present invention there is provided the use of a collector chemical composition which is an aqueous formulation of a polysiloxane and a delivery aid for the polysiloxane, the delivery aid comprising one of more compounds selected from an alkali metal salt of a fatty acid moiety, and a nitrogenous salt of a fatty acid moiety, and a water-swellable polymer, added to paper fibres which have been mechanically treated, shortly before or substantially at the commencement of ink removal, in a flotation deinking process, to achieve improved ink removal. Improved ink removal can be denoted by any one or more of: higher brightness of recycled paper; enhanced recovery of fibre; lower height and/or better control of foam, in flotation deinking processes; and reduced environmental impact of the wash liquor, and/or or reduced (or no) clean-up needed thereof, before disposal.

A method or use of the first, second or third aspect is preferably a flotation paper deinking process in which the removed ink and foam contains most of the weight of silicon-containing compound(s) present in the flotation cell, preferably at least 90 wt% thereof. Preferably none of, or a minimal amount of, the fibres are removed.

The compositions of the invention are designed to be used in commercial paper deinking and recycling processes, and use a defined soap and/or one or more polymeric water swellable polymeric polymers or emulsify and disperse the polysiloxane, acting as an emulsifying agent to aid the preparation of water dispersible oil-in-water emulsions of the polysiloxane. When dispersed in water either in the pulper or in the flotation tanks or cells, and diluted to low concentration, the polysiloxane is believed to be released in a highly dispersed form. Without being bound by theory, it is believed that, due to its powerful surface active properties, the polysiloxane is attracted to the surface of the dispersed ink particles, which, in a rising current of fine air bubbles, are more readily and more efficiently floated to the water surface for collection and removal from the bulk liquor containing paper fibres.

In a preferred aspect of the invention, hydrophobic silica may also be dispersed within the formulation. This improves foam control within the flotation cell, which allows the ink particles to be removed from the liquor containing paper fibres more selectively, thereby avoiding excessive loss of paper fibre, reducing wastage and improving efficiency of the process. The presence of hydrophobic silica is also believed to further increase the hydrophobic properties of the treated ink particles, thereby further improving the speed and efficiency of the flotation process.

Preferred features of any aspect herein are also preferred features of any other aspect herein.

The invention will now be further described, by way of example.

The collector chemical compositions were prepared by mixing together a delivery aid and a polysiloxane - and any further materials. Preferably the delivery is a formulation in soft water (as described above) and the polysiloxane is neat (i.e. as supplied, undiluted). Preferably the mixture is subjected to vigorous mixing, preferably high shear mixing, until a stable emulsion is formed, in which the hydrophobic polysiloxane, which would naturally separate from water; the formulations are held in a stable aqueous formulation, assisted by the delivery aid, the formulations being oil-in-water (o/w) emulsions. Suitable vigorous mixing may be achieved by appropriate manufacturing techniques such as high shear mixing, or pressure homogenisation, or sonolation.

A number of formulations have been prepared and evaluated using a laboratory scale flotation cell, model Voith Sulzer LFL 25B, capacity 23.6 litres. Pulping was carried out under standard conditions, using a controlled, consistent paper mixture (controlled sources of newsprint and magazine print, 275 g) and the addition in pulping of 1500 ml hot water (~ 45°C), 0.2% owp (on weight of dry paper) of sodium hydroxide (32% wt/wt), 2% owp of silicate (100% wt/wt) and 3% owp of hydrogen peroxide (30% wt/wt). Pulping was carried out in a food grade mixer. After pulping the pulp was put into 3 litres of hot (~ 45°C) water in a 5 litre beaker. The temperature was held at 45°C. This resembles the dump chest of a paper recycling mill.

Flotation tests were run. The Voith Sulzer flotation cell was half filled with softened water at 45°C. The pulp from the beaker was added. Tap water (45°C) was added until the 23.6 litre mark was reached. The required amount of the collector chemical composition was added to a jug containing 100 ml tap water (ambient temperature), and added to the flotation cell, and mixed for 4 minutes. The flotation cell time was set for aeration for 2 minutes and the further foam collected in a bucket. Aeration for a further 2 minutes was carried out, and the foam collected in a second bucket. Deinked paper pulp was recovered from the cell, paper discs were prepared and these were used to measure the brightness of the deinked paper using a MINOLTA CM-3630 spectrophotometer in accordance with test method ISO 2470: 1999. Fibre recovery efficiencies were also determined by simple techniques of washing, weighing and ashing. By comparison with brightness of discs prepared with pulp taken from the cell prior to addition of the deinking additive, it is possible to assess the brightness gain resulting from the chemical treatment. Collection chemical compositions used, with the results they achieved, are given below as examples.

Examples 1 - 10: These were prepared using a diethanolamine oleate soap (nitrogenous salt of a fatty acid) as a delivery aid (specifically: an emulsifier) dispersed in deionised water (12.9 wt% of diethanolamine oleate in the formulation). All examples were homogenised using a laboratory homogeniser. A number of examples have been presented on the same soap base to illustrate the effects of differing polysiloxane and silica combinations. Component amounts given in the examples below are stated as wt% on total collector chemical composition.

### Example 1

| | |
|---|---|
| 79.8% | Diethanolamine oleate soap in deionized water (10.3% salt as active) |
| 20.0% | Polydimethylsiloxane 350cst (Wacker AK350) |
| 0.2% | Hydrophobic silica (Sipernat D 10, a fine powder, from Degussa) |

### Example 2

| | |
|---|---|
| 79.0% | Diethanolamine oleate soap (10.2% salt as active) |
| 20.0% | Polydimethylsiloxane 350cst (Wacker AK350) |
| 1.0% | Hydrophobic silica (Sipernat D10) |

### Example 3

| | |
|---|---|
| 79.8% | Diethanolamine oleate soap (10.3% salt as active) |
| 20.0% | Polydimethylsiloxane 1000cst (Wacker AK1000) |
| 0.2% | Hydrophobic silica (Sipernat D10) |

### Example 4

| | |
|---|---|
| 79.7% | Diethanolamine oleate soap (10.3% salt as active) |
| 1.0% | Polymethylsiloxane resin (Wacker TPR resin) |
| 19.0% | Polydimethylsiloxane 1000cst (Wacker AK1000) |
| 0.2% | Hydrophobic silica (Sipernat D10) |
| 0.1% | Xanthan gum |

### Example 5

| | |
|---|---|
| 78.9% | Diethanolamine oleate soap (10.2% salt as active) |
| 1.0% | Polymethylsiloxane resin (Wacker TPR resin) |
| 19.0% | Polydimethylsiloxane 1000cst (Wacker AK1000) |
| 1.0% | Hydrophobic silica (Sipernat D10) |
| 0.1% | Xanthan gum. |

### Example 6

| | |
|---|---|
| 79.6% | Diethanolamine oleate soap (10.3% salt as active) |
| 1.0% | Polymethylsiloxane resin (Wacker TPR resin) |
| 5.0% | Prosil A100 (a proprietary blend of polydimethylsiloxane and hydrophobic silica) |
| 14.0% | Polydimethylsiloxane 5,000cst (Wacker AK5000) |
| 0.4% | Xanthan gum. |

### Example 7

| | |
|---|---|
| 79.6% | Diethanolamine oleate soap (10.3% salt as active) |
| 1.0% | Polymethylsiloxane resin (Wacker TPR resin) |
| 5.0% | Prosil A100 |
| 14.0% | Polydimethylsiloxane 10,000cst (Dow Corning 200 Fluid) |
| 0.4% | Xanthan gum. |

### Example 8

| | |
|---|---|
| 79.5% | Diethanolamine oleate soap (10.3% salt as active) |
| 5.0% | Cyclic pentadimethylsiloxane (BAYSILONE SF 1202, from Bayer) |
| 15.0% | Prosil A100 |
| 0.5% | Xanthan gum. |

### Example 9

| | |
|---|---|
| 76.5% | Diethanolamine oleate soap (10.3% salt as active) |
| 5.0% | Polydimethylsiloxane 50cst (Wacker AK50) |
| 18.0% | Prosil A100 |
| 0.5% | Xanthan gum. |

### Example 10

| | |
|---|---|
| 76.5% | Diethanolamine oleate soap (10.3% salt as active) |
| 5.0% | Polydimethylsiloxane 50cst (Wacker AK50) |
| 0.5% | Hydrophobic silica (Sipernat D10) |
| 17.5% | Polydimethylsiloxane 10,000cst (Dow Corning 200 Fluid) |
| 0.5% | Xanthan gum |

### Results for Brightness Gain on Examples 1 - 10

Samples marked * below used a new replacement printed paper furnish. The repeat measurement on Example 2 shows negligible difference on gain results.

In each case 0.1% weight of the collector chemical composition was used, on weight of (dry) paper.

The results are shown in the table which follows.

As is known to the person skilled in the art but mentioned here for information, +UV includes UV light in the reflectance detected and -UV does not include it.

| Example | +UV Initial | +UV @ 4 Min. Flotation | + UV Gain | -UV Initial | -UV @ 4 Min. Flotation | - UV Gain |
|---|---|---|---|---|---|---|
| 1 | 52.68 | 57.85 | 5.17 | 52.35 | 57.47 | 5.12 |
| 2 | 50.94 | 57.35 | 6.41 | 50.61 | 56.97 | 6.36 |
| 2 (repeat)* | 55.36 | 61.11 | 6.37 | 55.22 | 60.95 | 6.39 |
| 3 | 51.48 | 58.30 | 6.82 | 51.09 | 57.82 | 6.73 |
| 4* | 55.26 | 61.30 | 6.04 | 55.05 | 61.08 | 6.03 |
| 5* | 54.77 | 61.23 | 6.46 | 54.57 | 61.00 | 6.43 |
| 6* | 54.23 | 63.29 | 9.06 | 53.94 | 62.98 | 9.04 |
| 7* | 54.47 | 61.71 | 7.24 | 54.31 | 61.51 | 7.20 |
| 8* | 54.42 | 62.48 | 8.06 | 54.22 | 62.26 | 8.04 |
| 9* | 53.35 | 61.11 | 7.76 | 52.21 | 60.89 | 8.68 |
| 10* | 53.91 | 61.44 | 7.53 | 53.01 | 61.16 | 8.15 |

### Results for Fibre Yield on Examples 1 - 10

| Example | Yield @ 2 Min. Flotation | Yield @ 4 Min. Flotation. |
|---|---|---|
| 1 | 98.41% | 97.64% |
| 2 | 97.55% | 95.73% |
| 3 | 98.69% | 97.97% |
| 4 | 98.53% | 98.03% |
| 5 | 97.35% | 96.66% |
| 6 | 97.92% | 97.31% |
| 7 | 98.51% | 97.82% |
| 8 | 97.94% | 97.72% |
| 9 | 98.29% | 97.86% |
| 10 | 99.42% | 98.90% |

### Example 11

For this example, a different collector chemical composition was used, and the dosage concentration was gradually reduced to determine efficiency of the process even at extremely low treatment concentrations. The collector chemical composition contained a wide mixture of diethanolamine fatty acid salts, predominantly within the range C12 - C22 fatty acids, of both saturated and unsaturated types, at a concentration of 15%. As a further departure, this example was prepared using a laboratory model Greaves high shear mixer instead of a laboratory homogeniser.

### Formula:

| | |
|---|---|
| 72.8% | Diethanolamine /mixed fatty acid soap (10.9% salt as active) |
| 1.7% | Isol thickener AL3 (a proprietary acrylic thickener) |
| 5.5% | Polydimethylsiloxane 50cst (Wacker AK50) |
| 20.0% | Foam Doctor F2100 (a proprietary blend of polydimethylsiloxane and hydrophobic silica, from PennWhite Ltd.) |

Flotation tests were carried over a range of concentrations of the emulsion from 0.2% with respect to paper, down to only 0.02% wrt paper. Brightness measurements and brightness gains were determined as for the earlier examples.

The results are shown in the table which follows.

### Results for Example 11

| Emulsion concentration wrt paper charge wt/wt paper | +UV Initial | +UV @ 4 Min. Flotation | + UV Gain | -UV Initial | -UV Initial | - UV Gain |
|---|---|---|---|---|---|---|
| 0.20% | 55.03 | 62.05 | 7.02 | 54.87 | 61.86 | 6.99 |
| 0.15% | 55.22 | 61.51 | 6.29 | 55.07 | 61.31 | 6.24 |
| 0.10% | 55.13 | 61.98 | 6.85 | 54.55 | 61.98 | 7.22 |
| 0.10% (repeat) | 55.03 | 61.73 | 6.70 | 54.84 | 61.77 | 6.56 |
| 0.05% | 54.22 | 61.49 | 7.27 | 54.05 | 61.26 | 7.21 |
| 0.03% | 55.66 | 60.51 | 4.85 | 55.37 | 60.20 | 4.83 |
| 0.02% | 54.82 | 60.58 | 5.76 | 54.60 | 60.35 | 5.75 |

The following further examples 12-15 were formulated in the laboratory, then evaluated using the flotation techniques as previously described, except that the emulsion sample (previously called collector chemical) was weighed directly into the top of the flotation cell from a syringe without pre-dilution, at the same stage as previously, while the flotation cell mixer was switched on.

### Example 12

| | |
|---|---|
| 87.20% | Deionised water |
| 0.40% | Sodium chloride |
| 0.36% | Carbopol ETD 2020 |
| 0.73% | Triethanolamine |
| 2.43% | Polydimethylsiloxane (Wacker AK 50) |
| 7.30% | Polydimethylsiloxane (Wacker AK 1000) |
| 1.58% | Foam Doctor F2100 |

Non-volatile solids (NVS content) was 12.8% wt/wt.

### Example 13

| | |
|---|---|
| 83.50% | Softened water |
| 0.50% | Sodium chloride |
| 0.44% | Carbopol ETD 2020 |
| 0.88% | Diethanolamine |
| 2.94% | Polydimethylsiloxane (Wacker AK 50) |
| 8.80% | Polydimethylsiloxane (Wacker AK 1000) |
| 2.94% | Foam Doctor F2100 |

NVS Content 16.5% wt/wt

### Example 14

| | |
|---|---|
| 93.10% | Softened water |
| 0.90% | AxCel CGPX (a proprietary blend of sodium carboxymethylcellulose, xanthan gum and microfibrous cellulose from Kelco) |
| 1.20% | Polydimethylsiloxane (Wacker AK 50) |
| 3.60% | Polydimethylsiloxane (Wacker AK 1000) |
| 1.20% | Foam Doctor F2100 |

NVS Content was 6.9 % wt/wt

### Example 15

| | |
|---|---|
| 77.80% | Deionised water |
| 2.55% | Sodium chloride |
| 3.80% | Isol AL 3 (a proprietary blend of pre-neutralised polyacrylate copolymer, pre-dispersed in mineral oil, with added surfactant to assist swelling and dispersion in water). |
| 3.17% | Polydimethylsiloxane (Wacker AK 50) |
| 9.51% | Polydimethylsiloxane (Wacker AK 1000) |
| 3.17% | Foam Doctor F2100 |

NVS Content 22.2% wt/wt

### Example 16 - Control

### Example 16 was a Control example for Examples 12-15

The product used was a pelleted C12 - C18 sodium soap product with approximately 88% solids content (no polysiloxane present). This is a typical product in current use within the industry, which is normally used in deinking processes at 0.4% concentration with respect to paper.

### FLOTATION RESULTS

### Example 12

| Conc. wrt Paper charge: | 0.20%w/w | 0.10%w/w | 0.05%w/w | 0.02%w/w | 0.01%w/w |
|---|---|---|---|---|---|
| + UV initial | 55.04 | 54.97 | 55.97 | 55.09 | 55.95 |
| + UV @ 4min flotation | 61.96 | 62.26 | 62.64 | 61.82 | 61.74 |
| + UV gain | 6.92 | 7.29 | 6.67 | 6.73 | 5.79 |
| - UV initial | 54.01 | 54.77 | 55.54 | 54.95 | 55.69 |
| - UV @ 4min flotation | 61.70 | 61.99 | 62.18 | 61.63 | 61.46 |
| - UV gain | 7.67 | 7.22 | 6.64 | 6.68 | 5.77 |
| Total yield @ 2min flotation | 96.76 | 96.75 | 96.73 | 96.70 | 96.72 |
| Total yield @ 4min flotation | 95.37 | 95.19 | 95.34 | 94.80 | 95.29 |
| Fibre yield @ 2min flotation | 98.23 | 98.24 | 98.23 | 97.47 | 98.20 |
| Fibre yield @ 4min flotation | 97.51 | 97.40 | 97.47 | 96.63 | 97.44 |
| Ash yield @ 2min flotation | 84.04 | 84.56 | 84.88 | 89.80 | 85.44 |
| Ash yield @ 4min flotation | 76.75 | 77.10 | 78.55 | 78.32 | 78.92 |
| Initial ash content of pulp | 10.0 | 11.0 | 11.5 | 11.0 | 11.1 |
| % Ash content @ 4min flotation | 8.1 | 9.3 | 8.6 | 7.1 | 8.1 |
| Reduction in ash content | 1.9 | 1.7 | 2.9 | 3.9 | 3.0 |

### Example 13

| Conc. wrt Paper charge: | 0.20%w/w | 0.10%w/w | 0.05%w/w | 0.02%w/w | 0.01%w/w |
|---|---|---|---|---|---|
| + UV initial | 55.36 | 54.75 | 55.73 | 55.09 | 55.14 |
| + UV @ 4min flotation | 62.16 | 61.69 | 62.88 | 61.12 | 61.87 |
| + UV gain | 6.80 | 6.94 | 7.15 | 6.03 | 6.73 |
| - UV initial | 55.10 | 54.55 | 55.44 | 54.92 | 54.96 |
| - UV @ 4min flotation | 61.83 | 61.42 | 62.61 | 60.97 | 61.66 |
| - UV gain | 6.73 | 6.87 | 7.17 | 6.05 | 6.70 |
| Total yield @ 2min flotation | 96.81 | 96.56 | 95.31 | 96.11 | 96.59 |
| Total yield @ 4min flotation | 95.34 | 94.95 | 94.15 | 94.86 | 95.20 |
| Fibre yield @ 2min flotation. | 98.23 | 98.17 | 97.28 | 97.18 | 98.17 |
| Fibre yield @ 4min flotation | 97.43 | 97.30 | 96.63 | 96.22 | 97.45 |
| Ash yield @ 2min flotation | 85.02 | 83.54 | 80.94 | 84.87 | 83.98 |
| Ash yield @ 4min flotation | 77.95 | 75.95 | 76.13 | 80.51 | 77.17 |
| Initial ash content of pulp | 10.0 | 11.3 | 11.1 | 12.5 | 10.7 |
| % Ash content @ 4min flotation | 9.3 | 11.1 | 8.3 | 6.7 | 8.0 |
| Reduction in ash content | 0.7 | 0.2 | 2.8 | 5.8 | 2.7 |

### Example 14

| Conc. wrt Paper charge: | 0.20%w/w | 0.10%w/w | 0.05%w/w | 0.01%w/w |
|---|---|---|---|---|
| + UV initial | 55.29 | 56.05 | 55.52 | 55.30 |
| + UV @ 4min flotation | 60.94 | 61.63 | 61.94 | 61.01 |
| + UV gain | 5.65 | 5.58 | 6.12 | 5.71 |
| - UV initial | 55.11 | 55.86 | 55.26 | 55.08 |
| - UV @ 4min flotation | 60.70 | 61.36 | 61.33 | 60.72 |
| - UV gain | 5.59 | 5.50 | 6.07 | 5.64 |
| Total yield @ 2min flotation | 97.30 | 96.53 | 93.32 | 96.22 |
| Total yield @ 4min flotation | 95.93 | 95.00 | 91.77 | 94.91 |
| Fibre yield @ 2min flotation. | 98.61 | 98.16 | 94.98 | 97.96 |
| Fibre yield @ 4min flotation | 97.90 | 97.37 | 93.82 | 97.32 |
| Ash yield @ 2min flotation | 86.56 | 83.36 | 76.06 | 82.73 |
| Ash yield @ 4min flotation | 79.76 | 75.84 | 70.54 | 76.31 |
| Initial ash content of pulp | 12.0 | 11.4 | 12.3 | 11.6 |
| % Ash content @ 4min flotation | 7.4 | 10.6 | 9.0 | 8.7 |
| Reduction in ash content | 4.6 | 0.8 | 3.3 | 2.9 |

### Example 15

| Conc. wrt Paper charge: | 0.10% w/w | 0.05% w/w | 0.02% w/w | 0.01% w/w |
|---|---|---|---|---|
| + UV initial | 55.26 | 56.11 | 55.42 | 55.68 |
| + UV @ 4min flotation | 60.35 | 62.19 | 61.90 | 61.17 |
| + UV gain | 5.09 | 6.08 | 6.48 | 5.49 |
| - UV initial | 55.06 | 55.93 | 55.20 | 55.46 |
| - UV @ 4min flotation | 60.11 | 61.92 | 61.94 | 60.87 |
| - UV gain | 5.05 | 5.99 | 6.44 | 5.41 |
| Total yield @ 2min flotation | 96.96 | 97.17 | 97.26 | 97.49 |
| Total yield @ 4min flotation | 95.53 | 95.56 | 95.99 | 96.63 |
| Fibre yield @ 2min flotation. | 98.36 | 98.48 | 98.61 | 98.56 |
| Fibre yield @ 4min flotation | 97.58 | 97.63 | 97.93 | 98.06 |
| Ash yield @ 2min flotation | 85.35 | 85.37 | 87.17 | 86.05 |
| Ash yield @ 4min flotation | 78.55 | 76.93 | 81.46 | 81.42 |
| Initial ash content of pulp | 11.1 | 10.8 | 11.6 | 9.5 |
| % Ash content @ 4min flotation | 9.2 | 8.2 | 8.2 | 7.1 |
| Reduction in ash content | 1.9 | 2.6 | 3.4 | 2.4 |

### Example 16 - Control

| Conc. wrt Paper charge: | 0.40% w/w | 0.40% w/w (repeat) | 0.10% w/w |
|---|---|---|---|
| + UV initial | 56.00 | 55.27 | 57.14 |
| + UV @ 4min flotation | 63.04 | 62.41 | 60.36 |
| + UV gain | 7.04 | 7.14 | 3.22 |
| - UV initial | 55.49 | 55.03 | 56.79 |
| - UV @ 4min flotation | 62.45 | 62.09 | 59.98 |
| - UV gain | 6.96 | 7.06 | 3.19 |
| Total yield @ 2min flotation | 96.26 | 96.10 | 95.54 |
| Total yield @ 4min flotation | 94.52 | 95.10 | 94.01 |
| Fibre yield @ 2min flotation. | 97.36 | 98.59 | 97.28 |
| Fibre yield @ 4min flotation | 96.39 | 97.79 | 96.45 |
| Ash yield @ 2min flotation | 86.44 | 73.67 | 81.48 |
| Ash yield @ 4min flotation | 77.81 | 70.91 | 74.24 |
| Initial ash content of pulp | 10.3 | 8.7 | 10.8 |
| % Ash content @ 4min flotation | 7.4 | 8.4 | 8.2 |
| Reduction in ash content | 2.9 | 0.3 | 2.6 |

### DISCUSSION OF RESULTS for Examples 12-16

Brightness gains were measured as described with reference to Examples 1 to 11 above.

Ash contents and yields refer to the inorganic portion of the paper, which result from coatings and fillers, and are measured in the laboratory by ashing techniques.

Fibre yields refer to the proportion of cellulosic paper fibre recovery (the most valuable component).

Total yields refer to the combined fibre and ash components which were recovered in the laboratory flotation tests.

The formulations at Examples 12-15 were shown to give similar brightness gains to an industry standard sodium soap-based (no polysiloxane) product, Example 16. However, a major advantage of this invention is the extremely low concentrations which are demonstrated to be effective in Examples 1-15 (for down to 0.01% or less wrt paper, compared with the industry standard soap (no polysiloxane) of Example 16, at 0.4% wrt paper. Furthermore, in Examples 1-15 these results were achieved with lower active contents (i.e. approximately 7% - 35%, compared with the standard soap of Example 16, at 88%). Clearly, this offers major advantages, not only in cost, but also in environmental terms from reduced chemical usage, reduced packaging, and reduced transport requirements.

Use of these formulations was also demonstrated give comparable high yields of recovered fibre, offering high efficiency in paper recycling processes, with little wastage and no environmental issues from wastage. Reduction in ash content was typically 2 - 3%, giving recovered paper with ash contents mainly below 10%. This is considered to be an advantage particularly for older plants, which can experience difficulties in conversion of the recovered fibre to paper if the ash content is excessive.

It will be appreciated that the terms "paper" and "paper products" have been widely used in this specification as shorthand terms for cellulose fibre mats wet laid by a non-woven process and is intended to include materials such as tissue, card and the like.

It is conventional in the art to state that the mechanical treatment of waste paper breaks the paper down in "fibres". That conventional terminology has been used

In this specification it will be appreciated that such "fibres" of broken-down paper may themselves comprise smaller fibrils, and that the method of the invention does not require that the waste paper be broken down into discrete, individual cellulose strands.

The terms "ink, "print" and "deinking" etc. are used herein in a broad sense to denote marking on paper, however produced, including by, for example, photocopying where it might otherwise strictly be said that the marking applied is not "ink" nor is applied by conventional "printing".

## Claims

1. A method of removing ink from paper products by a flotation deinking process, comprising providing an aqueous medium which contains separated paper fibres derived from the paper products by mechanical treatment, and which also contains a collector chemical composition, **characterised in that** the collector chemical composition comprises a polysiloxane, and a delivery aid for the polysiloxane, the delivery aid comprising one of more compounds selected from an alkali metal salt of a fatty acid moiety, and a nitrogenous salt of a fatty acid moiety, and a water-swellable polymer; wherein the water-swellable polymer is a synthetic material, a natural material or a synthetically-modified natural material; and is selected from polyacrylates, other carboxylate polymers, celluloses or cellulose ethers, gums or hydrocolloids, and polyvinyl alcohols; and wherein the collector chemical composition is added after the completion of the mechanical treatment.

2. The method of claim 1, wherein the collector chemical composition is an aqueous emulsion.

3. The method of claim 1, wherein the collector chemical composition is supplied in a concentrated form and is diluted with water prior to or at the point of supply to the paper products or separated paper fibres.

4. The method as claimed in any preceding claim, wherein the nitrogenous salt is a dialkanolamine salt, preferably a diethanolamine of general formula R¹N(CH₂CH₂OH)₂ wherein R¹ represents a hydrogen atom or a C₁₋₆ alkyl group.

5. The method as claimed in any preceding claim, wherein the fatty acid comprises a C₅₋₂₈ fatty acid, or a C₁₀₋₅₆ dicarboxy fatty acid.

6. The method as claimed in any preceding claim wherein the water-soluble polymer contains an acrylate or cellulosic moiety.

7. The method as claimed in any preceding claim, wherein the polysiloxane is suitably a compound comprising multiple units of the formula -Si(R^{a})₂-O- , connected in a linear, cyclic or networked form, where each R^{a} independently represents a hydrocarbyl group or an oxygen atom.

8. The method as claimed in claim 7 wherein the polysiloxane is a compound having the groups 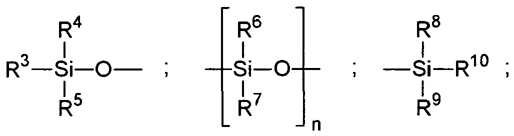 where:
R³ represents a hydroxyl group or hydrocarbyl group;
R⁴ represents a hydrocarbyl group or an oxygen atom;
R⁵ represents a hydrocarbyl group or an oxygen atom;
R⁶ represents a hydrocarbyl group or an oxygen atom;
R⁷ represents a hydrocarbyl group or an oxygen atom;
R⁸ represents a hydrocarbyl group or an oxygen atom;
R⁹ represents a hydrocarbyl group or an oxygen atom;
R¹⁰ represents a hydroxyl group or hydrocarbyl group;
and n is an integer, preferably from 3 to 3000.

9. The method as claimed in claim 7 or 8 wherein the polysiloxane comprises polydimethylsiloxane and/or cyclic pentadimethylsiloxane, optionally with polymethylsiloxane resin present.

10. The method of any preceding claim wherein:
the ratio of the polysiloxane to the delivery aid, when the delivery aid is a fatty acid salt, is in the range 0.1-50 parts, preferably 1-40 parts, preferably 5-30 parts, preferably 10-30 parts polysiloxane, to 10 parts delivery aid, wt/wt; and
wherein the ratio of the polysiloxane to the delivery aid, when the delivery aid is a water-swellable polymer, is in the range 3-200 parts, preferably 10-150 parts, preferably 20-120 parts, preferably 25-100 parts polysiloxane, to 1 part delivery aid, wt/wt.

11. The method of any preceding claim wherein the collector chemical composition includes hydrophobic silica.

12. A method of removing ink from paper products, the method being as claimed in any preceding claim, and recycling said printed paper products, comprising:
subjecting the paper products to a mechanical treatment (pulping) in an aqueous medium until substantially broken down into fibres; adding to the medium, after the mechanical treatment, said collector chemical composition;
passing a gas through the aqueous medium containing the fibres and the collector chemical composition and removing the ink-rich foam on the surface and/or removing ink by successive cycles of draining and rinsing; and recovering the cleansed paper pulp.

13. Use of a collector chemical composition which is an aqueous formulation of a polysiloxane and a delivery aid for the polysiloxane, the delivery aid comprising one of more compounds selected from an alkali metal salt of a fatty acid moiety, and a nitrogenous salt of a fatty acid moiety, and a water-swellable polymer, wherein the water-swellable polymer is a synthetic material, a natural material or a synthetically-modified natural material; and is selected from polyacrylates, other carboxylate polymers, celluloses or cellulose ethers, gums or hydrocolloids, and polyvinyl alcohols; added to paper fibres which have been mechanically treated, shortly before or substantially at the commencement of ink removal, in a flotation deinking process, to achieve improved ink removal.

## Patentansprüche

1. Verfahren zum Entfernen von Tinte aus Papierprodukten durch ein Flotations-Tintenentfernungsverfahren, umfassend das Bereitstellen eines wässrigen Mediums, das getrennte Papierfasern enthält, die durch mechanische Behandlung aus den Papierprodukten erhalten sind, und das auch eine chemische Sammler-Zusammensetzung enthält, **dadurch gekennzeichnet, dass** die chemische Sammler-Zusammensetzung ein Polysiloxan und ein Abgabe-Hilfsmittel für das Polysiloxan umfasst, wobei das Abgabe-Hilfsmittel eine oder mehrere Verbindungen umfasst, ausgewählt aus einem Alkalimetallsalz einer Fettsäureeinheit und einem stickstoffhaltigen Salz einer Fettsäureeinheit und einem wasserquellbaren Polymer; wobei das wasserquellbare Polymer ein synthetisches Material, ein natürliches Material oder ein synthetisch modifiziertes natürliches Material ist; und ausgewählt ist aus Polyacrylaten, anderen Carboxylatpolymeren, Cellulosen oder Celluloseethern, Gummis oder Hydrokolloiden und Polyvinylalkoholen; und wobei die chemische Sammler-Zusammensetzung nach dem Abschluss der mechanischen Behandlung zugegeben wird.

2. Verfahren gemäß Anspruch 1, wobei die chemische Sammler-Zusammensetzung eine wässrige Emulsion ist.

3. Verfahren gemäß Anspruch 1, wobei die chemische Sammler-Zusammensetzung in einer konzentrierten Form zugeführt wird und vor dem Zuführen oder zum Zeitpunkt des Zuführens zu den Papierprodukten oder getrennten Papierfasern mit Wasser verdünnt wird.

4. Verfahren gemäß einem der vorstehenden Ansprüche, wobei das stickstoffhaltige Salz ein Dialkanolamin-Salz ist, vorzugsweise ein Diethanolamin der allgemeinen Formel R¹N(CH₂CH₂OH)₂, wobei R¹ ein Wasserstoffatom oder eine C₁₋₆-Alkylgruppe darstellt.

5. Verfahren gemäß einem der vorstehenden Ansprüche, wobei die Fettsäure eine C₅₋₂₈-Fettsäure oder eine C₁₀₋₅₆-Dicarboxy-Fettsäure umfasst.

6. Verfahren gemäß einem der vorstehenden Ansprüche, wobei das wasserlösliche Polymer eine Acrylat - oder Celluloseeinheit enthält.

7. Verfahren gemäß einem der vorstehenden Ansprüche, wobei das Polysiloxan geeigneterweise eine Verbindung ist, die mehrere Einheiten der Formel -Si(R^{a})₂-O- umfasst, die auf lineare, cyclische oder vernetzte Weise verknüpft sind, wobei jedes R^{a} unabhängig eine Hydrocarbylgruppe oder ein Sauerstoffatom darstellt.

8. Verfahren gemäß Anspruch 7, wobei das Polysiloxan eine Verbindung ist, die die Gruppen 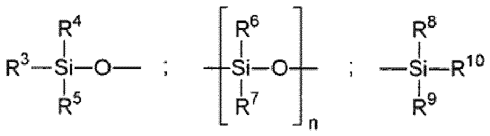 aufweist, wobei:
R³ eine Hydroxygruppe oder eine Hydrocarbylgruppe darstellt;
R⁴ eine Hydrocarbylgruppe oder ein Sauerstoffatom darstellt;
R⁵ eine Hydrocarbylgruppe oder ein Sauerstoffatom darstellt;
R⁶ eine Hydrocarbylgruppe oder ein Sauerstoffatom darstellt;
R⁷ eine Hydrocarbylgruppe oder ein Sauerstoffatom darstellt;
R⁸ eine Hydrocarbylgruppe oder ein Sauerstoffatom darstellt;
R⁹ eine Hydrocarbylgruppe oder ein Sauerstoffatom darstellt;
R¹⁰ eine Hydroxygruppe oder eine Hydrocarbylgruppe darstellt;
und n eine ganze Zahl ist, vorzugsweise von 3 bis 3000.

9. Verfahren gemäß Anspruch 7 oder 8, wobei das Polysiloxan Polydimethylsiloxan und/oder cyclisches Pentadimethylsiloxan umfasst, gegebenenfalls mit vorhandenem Polymethylsiloxanharz.

10. Verfahren gemäß einem der vorstehenden Ansprüche, wobei:
das Gew./Gew.-Verhältnis des Polysiloxans zu dem Abgabe-Hilfsmittel, wenn das Abgabe-Hilfsmittel ein Fettsäuresalz ist, im Bereich von 0,1-50 Teilen, vorzugsweise 1-40 Teilen, vorzugsweise 5-30 Teilen, vorzugsweise 10-30 Teilen Polysiloxan zu 10 Teilen Abgabe-Hilfsmittel beträgt; und
das Gew./Gew.-Verhältnis des Polysiloxans zu dem Abgabe-Hilfsmittel, wenn das Abgabe-Hilfsmittel ein wasserquellbares Polymer ist, im Bereich von 3-200 Teilen, vorzugsweise 10-150 Teilen, vorzugsweise 20-120 Teilen, vorzugsweise 25-100 Teilen Polysiloxan zu 1 Teil Abgabe-Hilfsmittel beträgt.

11. Verfahren gemäß einem der vorstehenden Ansprüche, wobei die chemische Sammler-Zusammensetzung hydrophobes Silica umfasst.

12. Verfahren zum Entfernen von Tinte aus Papierprodukten, wobei das Verfahren wie in einem der vorstehenden Ansprüche beansprucht ist, und Recycling der bedruckten Papierprodukte, umfassend: Unterwerfen der Papierprodukte einer mechanischen Behandlung (Aufschluss) in einem wässrigen Medium, bis sie im Wesentlichen zu Fasern aufgetrennt sind; nach der mechanischen Behandlung Zugeben der chemischen Sammler-Zusammensetzung zu dem Medium; Durchleiten eines Gases durch das wässrige Medium, das die Fasern und die chemische Sammler-Zusammensetzung enthält, und Entfernen des tintenreichen Schaums an der Oberfläche und/oder Entfernen von Tinte durch aufeinanderfolgende Zyklen von Entwässern und Spülen; und Gewinnen der gereinigten Papierpulpe.

13. Verwendung einer chemischen Sammler-Zusammensetzung, die eine wässrige Formulierung eines Polysiloxans und eines Abgabe-Hilfsmittels für das Polysiloxan ist, wobei das Abgabe-Hilfsmittel eine oder mehrere Verbindungen umfasst, ausgewählt aus einem Alkalimetallsalz einer Fettsäureeinheit und einem stickstoffhaltigen Salz einer Fettsäureeinheit und einem wasserquellbaren Polymer, wobei das wasserquellbare Polymer ein synthetisches Material, ein natürliches Material oder ein synthetisch modifiziertes natürliches Material ist; und ausgewählt ist aus Polyacrylaten, anderen Carboxylatpolymeren, Cellulosen oder Celluloseethern, Gummis, Hydrokolloiden und Polyvinylalkoholen; zugegeben zu Papierfasern, die kurz vor oder im Wesentlichen bei dem Beginn der Tintenentfernung mechanisch behandelt worden sind, bei einem Flotations-Tintenentfernungsverfahren, um verbesserte Tintenentfernung zu erzielen.

## Revendications

1. Procédé de retrait d'encre de produits de papier par un procédé de désencrage par flottaison, comprenant la fourniture d'un milieu aqueux qui contient des fibres de papier séparées dérivées des produits de papier par traitement mécanique, et qui contient en outre une composition chimique collectrice, **caractérisé en ce que** la composition chimique collectrice comprend un polysiloxane, et un adjuvant de distribution pour le polysiloxane, l'adjuvant de distribution comprenant un ou plusieurs composés choisis parmi un sel de métal alcalin d'un fragment d'acide gras, et un sel azoté d'un fragment d'acide gras, et un polymère gonflable dans l'eau ; le polymère gonflable dans l'eau étant un matériau synthétique, un matériau naturel ou un matériau naturel modifié de façon synthétique ; et étant choisi parmi des polyacrylates, d'autres polymères de carboxylate, des celluloses ou des éthers de cellulose, des gommes ou des hydrocolloïdes, et des poly(alcools vinyliques) ; et la composition chimique collectrice étant ajoutée après la fin du traitement mécanique.

2. Procédé de la revendication 1, dans lequel la composition chimique collectrice est une émulsion aqueuse.

3. Procédé de la revendication 1, dans lequel la composition chimique collectrice est fournie sous une forme concentrée et est diluée avec de l'eau avant ou au point d'alimentation sur les produits de papier ou les fibres de papier séparées.

4. Procédé selon l'une quelconque des revendications précédentes, dans lequel le sel azoté est un sel de dialcanolamine, de préférence une diéthanolamine de formule générale R¹N(CH₂CH₂OH)₂ dans laquelle R¹ représente un atome d'hydrogène ou un groupe alkyle en C₁-C₆.

5. Procédé selon l'une quelconque des revendications précédentes, dans lequel l'acide gras comprend un acide gras en C₅-C₂₈, ou un acide gras dicarboxylique en C₁₀-C₅₆.

6. Procédé selon l'une quelconque des revendications précédentes, dans lequel le polymère hydrosoluble contient un fragment acrylate ou cellulosique.

7. Procédé selon l'une quelconque des revendications précédentes, le polysiloxane étant de manière appropriée un composé comprenant des motifs multiples de formule -Si(R^{a})₂-O-, connectés sous une forme linéaire, cyclique ou en réseau, où chaque R^{a} représente indépendamment un groupe hydrocarbyle ou un atome d'oxygène.

8. Procédé selon la revendication 7 dans lequel le polysiloxane est un composé ayant les groupes 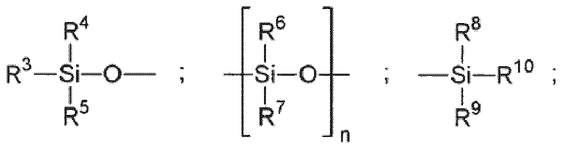 où :
R³ représente un groupe hydroxyle ou un groupe hydrocarbyle ;
R⁴ représente un groupe hydrocarbyle ou un atome d'oxygène ;
R⁵ représente un groupe hydrocarbyle ou un atome d'oxygène ;
R⁶ représente un groupe hydrocarbyle ou un atome d'oxygène ;
R⁷ représente un groupe hydrocarbyle ou un atome d'oxygène ;
R⁸ représente un groupe hydrocarbyle ou un atome d'oxygène ;
R⁹ représente un groupe hydrocarbyle ou un atome d'oxygène ;
R¹⁰ représente un groupe hydroxyle ou un groupe hydrocarbyle ;
et n est un entier, de préférence de 3 à 3000.

9. Procédé selon la revendication 7 ou 8 dans lequel le polysiloxane comprend un polydiméthylsiloxane et/ou un pentadiméthylsiloxane cyclique, facultativement en présence d'une résine de polyméthylsiloxane.

10. Procédé de l'une quelconque des revendications précédentes dans lequel :
le rapport du polysiloxane à l'adjuvant de distribution, lorsque l'adjuvant de distribution est un sel d'acide gras, est dans la plage de 0,1 à 50 parties, de préférence de 1 à 40 parties, de préférence de 5 à 30 parties, de préférence de 10 à 30 parties de polysiloxane, à 10 parties d'adjuvant de distribution, poids/poids ; et
dans lequel le rapport du polysiloxane à l'adjuvant de distribution, lorsque l'adjuvant de distribution est un polymère gonflable dans l'eau, est dans la plage de 3 à 200 parties, de préférence de 10 à 150 parties, de préférence de 20 à 120 parties, de préférence de 25 à 100 parties de polysiloxane, à 1 partie d'adjuvant de distribution, poids/poids.

11. Procédé de l'une quelconque des revendications précédentes dans lequel la composition chimique collectrice comprend de la silice hydrophobe.

12. Procédé d'élimination d'encre de produits de papier, le procédé étant selon l'une quelconque des revendications précédentes, et de recyclage desdits produits de papier imprimés, comprenant : la soumission des produits de papier à un traitement mécanique (fabrication de pâte) dans un milieu aqueux jusqu'à ce qu'ils soient substantiellement décomposés en fibres ; l'ajout au milieu, après le traitement mécanique, de ladite composition chimique collectrice ; le passage d'un gaz à travers le milieu aqueux contenant les fibres et la composition chimique collectrice et l'élimination de la mousse riche en encre sur la surface et/ou l'élimination de l'encre par des cycles successifs de drainage et de rinçage ; et la récupération de la pâte à papier nettoyée.

13. Utilisation d'une composition chimique collectrice qui est une formulation aqueuse d'un polysiloxane et un adjuvant de distribution pour le polysiloxane, l'adjuvant de distribution comprenant un ou plusieurs composés choisis parmi un sel de métal alcalin d'un fragment d'acide gras, et un sel azoté d'un fragment d'acide gras, et un polymère gonflable dans l'eau, le polymère gonflable dans l'eau étant un matériau synthétique, un matériau naturel ou un matériau naturel modifié de façon synthétique ; et étant choisi parmi des polyacrylates, d'autres polymères de carboxylate, des celluloses ou des éthers de cellulose, des gommes ou des hydrocolloïdes, et des poly(alcools vinyliques) ; ajoutée à des fibres de papier qui ont été mécaniquement traitées, peu avant ou sensiblement au début du retrait d'encre, dans un procédé de désencrage par flottaison, pour obtenir une élimination d'encre améliorée.
